## Europäisches Patentamt
## European Patent Office
## Office européen des brevets

(19)

(11) Veröffentlichungsnummer: **0 174 505**
**B1**

(12) **EUROPÄISCHE PATENTSCHRIFT**

(45) Veröffentlichungstag der Patentschrift: 04.07.90

(21) Anmeldenummer: 85110037.0

(22) Anmeldetag: 09.08.85

(51) Int. Cl.⁵: **G 01 J 3/10,** G 01 N 21/67, H 01 J 17/40

(54) Glimmentladungslampe zur Untersuchung einer Probe mittels Spektralanalyse.

(30) Priorität: 13.08.84 DE 3429800
13.08.84 DE 3429765

(43) Veröffentlichungstag der Anmeldung:
19.03.86 Patentblatt 86/12

(45) Bekanntmachung des Hinweises auf die
Patenterteilung:
04.07.90 Patentblatt 90/27

(84) Benannte Vertragsstaaten:
AT BE CH DE FR GB LI NL

(56) Entgegenhaltungen:
EP-A-0 015 391
DE-A-2 432 203
US-A-3 543 077

PATENTS ABSTRACTS OF JAPAN, Band 7, Nr.
290 (P-245)1435r, 24. Dezember 1983; & JP - A -
58 161 851 (DAINI SEIKOSHA K.K.) 26.09.1983

(73) Patentinhaber: Ko, Jae Bak
Im Rosengrund 6
D-5840 Schwerte (DE)

(72) Erfinder: Ko, Jae Bak
Im Rosengrund 6
D-5840 Schwerte (DE)

## Beschreibung

Die Erfindung bezieht sich auf eine Glimmentladungslampe gemäß den Merkmalen des Oberbegriffs des Anspruchs 1.

Bei einer bekannten Glimmentladungslampe dieser Art (DE-OS 24 32 203) befindet sich die Probe auf einem Probenhalter, der mit dem negativen Potential verbunden ist. In dem hiervon isolierten Gehäuse ist die auf positivem Potential liegende Anode gehalten.

Bei einer weiteren bekannten Glimmentladungslampe dieser Art (DE-PS 15 89 389) ist das Gehäuse aus leitendem Material gefertigt, wobei zwischen dem Anoden- und dem Kathodenteil der Lampe eine Isolationszwischenlage angebracht ist. Im Inneren dieses Gehäuses wird der Gasraum mit einem Trägergas unter vermindertem Druck durchströmt. Mit dem Kathodenteil elektrisch leitend verbunden und somit auch Bestandteil der Kathode dieser Glimmentladungslampe ist die zu untersuchende Probe aus elektrisch leitendem Material. Die Probe ist an das Gehäuse angefügt und begrenzt somit einen Teil des inneren Gasraums, so daß bei Anliegen einer Spannung zwischen Anode und Kathode zwischen Anode und Probe eine Glimmentladung entsteht. Die Betriebsparameter Spannung, Strom und Gasdruck in der Entladung werden so eingestellt, daß durch die Entladung Probenmaterial abgebaut wird und in den Gasraum gelangt. Am der Probe gegenüberliegenden Ende des inneren Gasraums der bekannten Glimmentladungslampe befindet sich eine Quarzglasscheibe, die zwar den inneren Gasraum vollständig abdichtet, jedoch den Austritt der durch die Glimmentladung hervorgerufenen Lichtstrahlung ermöglicht. Durch die Beimengung von aus der zu analysierenden probe abgebauten Partikeln im Trägergas entsteht ein spezifisches Glimmlicht, dessen spektrale Bestandteile eine Aussage über die Zusammensetzung der Probe ergeben. Durch den im großen und ganzen metallisch leitenden Aufbau des Gehäuses der Glimmentladungslampe hinsichtlich des Anoden- und des Kathodenteils ist zur Gewährleistung einer ausreichenden Kurzschlußfestigkeit bei den verwendeten hohen Spannungen ein erheblicher Aufwand notwendig. Auch hinsichtlich des zwischen dem Anodenteil und der Probe (Kathode) gebildeten Spalts muß zum Erreichen einer regulären Entladung im Gasraum eine gewisse Anfälligkeit für Kurzschlüsse in Kauf genommen werden.

Der Erfindung liegt die Aufgabe zugrunde, eine Glimmentladungslampe zur Untersuchung einer Probe mittels Spektralanalyse zu schaffen, bei der der Aufbau mit Materialien vorgenommen wird, die eine optimale Gestaltung der Glimmentladungszone und des Gehäuses hinsichtlich Kurzschlußfestigkeit und Geometrie der Glimmentladungszone gewährleisten.

Zur Lösung dieser Aufgabe weist eine Glimmentladungslampe der eingangs genannten Art die Merkmale des Kennzeichens des Anspruchs 1 auf. Die erfindungsgemäße Glimmlampe ist insofern vorteilhaft aufgebaut, daß durch das Einbetten der Anode in einen festen nichtleitenden Körper die Kurzschlußfestigkeit des Gehäuses der Glimmlampe auf einfache Art und Weise gewährleistet werden kann. Die Anode ist nicht mehr konstruktiv auf Nullpotential festgelegt, d. h., es besteht die Möglichkeit, die Probe und somit große Teile des Gehäuses der Glimmlampe auf Nullpotential zu legen, wodurch beim zwangsläufig notwendig werdenden Auswechseln der Probe am Gehäuse keine besonderen Sicherheitsmaßnahmen mehr erforderlich sind. Durch die Anbringung von nichtleitendem Material im Gasraum wird außerdem erreicht, daß sich die Wände des Entladungsraums schnell auf die Temperatur im Gasraum einstellen, da das elektrisch nichtleitende Material in der Regel auch schlecht wärmeleitfähig ist und somit der Transport der Wärme im Gehäuse verschlechtert wird. Dies bewirkt die schnelle Einstellung konstanter Meßbedingungen. Dadurch, daß der Spalt zwischen Probe und Anode nicht mehr zwingend die Stelle mit dem geringsten Gasdruck bildet, kann beispielsweise durch die Konstruktion eines Vakuumanschlusses an der Austrittsöffnung eine ideale dünne und dichte Glimmzone geschaffen werden, die eine geringe Selbstabsorption bei gleicher Intensität der Glimmentladung gewährleistet.

Eine besonders vorteilhafte Ausgestaltung der erfindungsgemäßen Glimmentladungslampe ergibt sich mit den Merkmalen des Anspruchs 2. Die erfindungsgemäße Anordnung ermöglicht eine Gestaltung der Druckverteilung über der Probe, die eine besonders gleichmäßige Abtragung der Probe verursacht. Dies ist beispielsweise besonders dann wichtig, wenn die Zusammensetzung einer dünnen Oberflächenschicht auf einer Probe untersucht werden soll.

Weitere vorteilhafte Ausgestaltungen der erfindungsgemäßen Glimmentladungslampe sind in den übrigen abhängigen Ansprüchen angegeben.

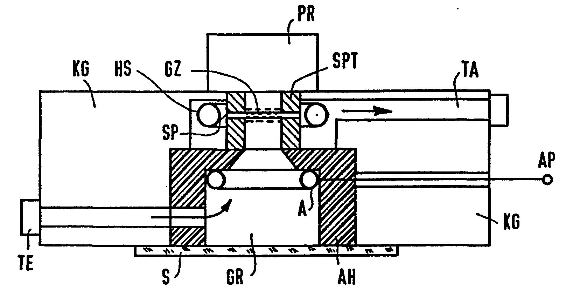

Die Erfindung wird anhand der Figur erläutert, die eine Schnittdarstellung durch ein Ausführungsbeispiel der erfindungsgemäßen Anordnung darstellt.

Das Ausführungsbeispiel nach der Figur weist ein sich auf dem Kathodenpotential bzw. Nullpotential befindendes leitendes Gehäuse KG auf. Am Gehäuse ist eine zu analysierende Probe PR angebracht, von deren Oberfläche ein Teil einen inneren Gasraum GR mit abschließt. Desweiteren wird der innere Gasraum GR von einem Spaltteil SPT aus nichtleitendem Material, einem nichtleitenden Körper als Anodenhalterung AH sowie der aus metallischem Material hergestellten Anode A begrenzt. Durch eine Einlaßöffnung TE am Gehäuse KG strömt ein Trägergas, z. B. Argon, in den inneren Gasraum GR ein. Der Gasstrom bewegt sich zu Spalten SP im Spaltteil SPT und strömt durch die Auslaßöffnung TA, die beispielsweise mit einem Vakuum verbunden sein kann, wieder aus. Das Spaltteil SPT kann auch aus einem nichtleitenden porösen Keramikmaterial gebildet sein, dessen Poren so angeordnet sind, daß durch sie hindurch ein optimaler Gasstrom fließt.

Ein elektrischer Anschluß AP für die sich auf Hochspannungspotential befindende Anode A ist an einer Seite des Gehäuses KG herausgeführt. Ein Anschluß für die sich auf Nullpotential Defindliche Kathode ist hier nicht dargestellt, er kann auf übliche Weise durch den konstruktiven Einbau der Glimmlampe vorgenommen werden.

Das in den inneren Gasraum GR einströmende Trägergas verdichtet beim Ausströmen durch den Spalt SP die aus der Probe abgetragenen Partikel in diesem Bereich derart, daß hier eine sehr dünne, aber sehr dichte Glimmzone GZ entsteht. Diese Glimmzone liegt im Bereich des Kathodenfalls zwischen der Anode A und der Probe PR, die sich auf Nullpotential befindet und somit die Kathode darstellt. Das teilweise ionisierte Trägergas wird durch Beschleunigung im elektrischen Feld mit erheblicher Energie auf die Oberfläche der Probe PR geschleudert, so daß hier eine gleichmäßige Zerstäubung von Dberflächenpartikeln der Probe PR erfolgt. Das im Bereich der Glimmzone GZ auftretende Gas ist somit ein Gemisch aus Trägergas und partikeln, die aus der Probe PR stammen. Da die Lichtemission bei der Glimmentladung sich in erster Linie aus den Atomspektren der beteiligten Atome zusammensetzt, ist es durch Spektralanalyse möglich, die für die einzelnen Elemente spezifischen Spektrallinien zu erfassen und aus der Lichtmenge die Konzentration des betreffenden Elements in der Entladung und damit in der Probe zu bestimmen. Die Erfassung und Auswertung der Lichtemission erfolgt durch eine Quarzglasscheibe S als durchsichtiges Gehäuseteil hindurch mit einer hier nicht dargestellten, in üblicher Weise ausgeführten Vorrichtung zur Durchführung von Spektralanalysen im Bereich des sichtbaren Lichtes.

Um das Spaltteil SPT herum ist eine Hochfrequenzspule HS angeordnet. Diese Hochfrequenzspule HS erzeugt somit genau im Bereich der Glimmzone GZ ein hochfrequentes Wechselfeld, mit dem die Entladungsvorgänge in der Glimmzone GZ gesteuert und verstärkt werden können, so daß sich die Lichtmenge je Element bei konstanter Konzentration erhöht. Damit ist es möglich, geringere Konzentrationen der Elemente in der Entladung noch zu erfassen.

Da das Gehäuse der Glimmentladungslampe sowie die Probe PR aus leitendem Material aufgebaut ist, ergibt sich eine hervorragende Abschirmung der Hochfrequenzspule HS nach außen, so daß hier keine besonderen Abschirmmaßnahmen notwendig sind.

**Patentansprüche**

1. Glimmentladungslampe zur Untersuchung einer Probe mittels Spektralanalyse mit
einem inneren Gasraum (GR), der von einem Trägergas durchströmt wird, wobei
bei angelegter Spannung zwischen Anode (A) und Kathode im Gasraum (GR) eine Glimmentladung hervorgerufen wird,
der Probe (PR) als Teil der Kathode,
einem durchsichtigen Gehäuseteil (S) zur Spektralanalyse des Glimmentladungslichtes und
einem festen nichtleitenden Körper (AH), in den die Anode (A) zum Teil eingebettet ist, dadurch gekennzeichnet, daß
das Gehäuse (KG) der Glimmentladungslampe aus leitendem Material hergestellt ist und sich auf Nullpotential befindet und daß
die Probe (PR) während der Analyse leitend mit diesem Gehäuse verbunden ist.

2. Glimmentladungslampe nach Anspruch 1, dadurch gekennzeichnet, daß
im Bereich des die Anode (A) tragenden nichtleitenden Körpers (AH) nahe der den Gasraum (GR) als Kathode abschließenden Probe (PR) eine Austrittsöffnung (TA) für das Gas derart angebracht ist, daß
in einer Ebene parallel zur Oberfläche der den Gasraum (GR) abschließenden Probe (PR) eine Verdichtung des zerstäubten Probenmaterials erfolgt.

3. Glimmentladungslampe nach Anspruch 2, dadurch gekennzeichnet, daß die Ebene der Austrittsöffnung (TA) in einem Abstand von 0,5 mm bis 20 mm zur Probe (PR) liegt.

4. Glimmentladungslampe nach Anspruch 3 oder Anspruch 2, dadurch gekennzeichnet, daß der innere Gasraum (GR) und die Anode (A) rotationssymmetrisch sind und die Austrittsöffnung (TA) als sich kreisförmig über die Innenwand erstreckender Spalt (SP) in einem Spaltteil (SPT) ausgebildet ist.

5. Glimmentladungslampe nach Anspruch 3 oder Anspruch 2, dadurch gekennzeichnet, daß der innere Gasraum (GR) und die Anode (A) rotationssymmetrisch sind und die Austrittsöffnung (TA) durch Poren eines porösen nichtleitenden Materials eines Spaltteils (SPT) gebildet sind.

6. Glimmentladungslampe nach Anspruch 4 oder Anspruch 5 mit einem rotationssymmetrisch aufgebauten Gasraum, dadurch gekennzeichnet, daß
der Innendurchmesser des nichtleitenden Körpers (AH) vom Bereich der Anode (A) bis zum Bereich der Austrittsöffnung (TA) verringert ist, so daß sich ein kegelstumpfförmiger Innenraum ergibt, und daß die Anode ringförmig ausgebildet ist.

7. Glimmentladungslampe nach einem der vorhergehenden Ansprüche, dadurch gekennzeichnet, daß
der nichtleitende Körper (AH) aus spanend und/oder nichtspanend bearbeitbarem Keramikmaterial hergestellt ist, das durch Temperaturen im Bereich bis 300 °C nicht beeinflußbar ist.

8. Glimmentladungslampe nach einem der vorhergehenden Ansprüche, dadurch gekennzeichnet, daß der Abstand zwischen der Anode und der als Kathode wirkenden Probe 1 bis 5 cm beträgt.

## Revendications

1. Tube à décharge lumineuse pour l'examen d'un échantillon par analyse spectrale, comportant

une chambre à gaz intérieure (GR) qui est traversée par un gaz-véhicule,

une décharge par effluve étant provoquée dans la chambre à gaz lors de l'application d'une tension entre l'anode (A) et la cathode,

l'échantillon (PR) constituant une partie de la cathode,

un élément de boîtier (S) transparent pour l'analyse spectrale du tube à décharge lumineuse, et

un corps solide non conducteur (AH) dans lequel l'anode (A) est noyée en partie, caractérisé par le fait que

le boîtier du tube à décharge lumineuse étant fabriqué avec un matériau conducteur et est porté au potentiel nul, et que

l'échantillon (PR) est relié à conduction avec le boîtier, pendant l'analyse spectrale.

2. Tube à décharge lumineuse selon la revendication 1, caractérisé par le fait que

dans le voisinage du corps non conducteur (AH) qui porte l'anode (A), et près de l'échantillon (PR) qui ferme, en tant que cathode, la chambre à gaz (GR), est ménagée de telle manière une ouverture de sortie (TA) pour le gaz, que

dans un plan qui est parallèle à la surface de l'échantillon (PR) qui ferme la chambre à gaz (GR), a lieu une compression du matériau de l'échantillon pulvérisé.

3. Tube à décharge lumineuse selon la revendication 2, caractérisé par le fait que

le plan de l'ouverture de sortie (TA) se situe à une distance de l'échantillon (PR) égale à 0,5 mm à 20 mm.

4. Tube à décharge lumineuse selon la revendication 3 ou la revendication 2, caractérisé par le fait que

la chambre à gaz intérieure (GR) et l'anode (A) présentent une symétrie de révolution et l'ouverture de sortie (TA) est réalisée dans une partie (SPT) d'une fente (SP) qui s'étend en forme de cercle sur la paroi intérieure.

5. Tube à décharge lumineuse selon la revendication 3 ou la revendication 2, caractérisé par le fait que

la chambre à gaz intérieure (GR) et l'anode (A) présentent une symétrie de révolution et l'ouverture de sortie (TA) est constituée par des pores d'une partie de fente (SPT) en un matériau non poreux et non conducteur.

6. Tube à décharge lumineuse selon la revendication 4 ou la revendication 5, caractérisé par le fait que

le diamètre intérieur du corps non conducteur (AH) est diminué de la zone où se trouve l'anode (A) jusqu'à la zone où se situe l'ouverture de sortie (TA), en sorte que se forme une chambre intérieure en forme d'un tronc de cône, et que

l'anode est réalisée avec une forme annulaire.

7. Tube à décharge lumineuse selon l'une des revendications précédentes, caractérisé par le fait que

le corps non conducteur (AH) est réalisé avec un matériau céramique capable d'être traité avec ou sans enlèvement de copeaux et non influençable par des températures qui se situent dans une plage allant jusqu'à 300°C.

8. Tube à décharge lumineuse selon l'une des revendications précédentes, caractérisé par le fait que

la distance entre l'anode et l'échantillon opérant comme cathode est égale à 1 à 5 mm.

## Claims

1. Glow discharge lamp for testing a specimen by means of spectral analysis, having

an inner gas chamber (GR), through which flows a carrier gas,

a glow discharge being produced when a voltage is applied between the anode (A) and the cathode in the gas chamber (GR), the specimen (PR) as a part of the cathode,

a transparent housing portion (S) for spectral analysis of the glow discharge light and

a fixed non-conductive body (AH) into which the anode (A) is partially embedded, characterised in that

the housing of the glow discharge lamp is made of conductive material and is at zero potential and in that

the specimen (PR) is conductively connected to this housing during analysis.

2. Glow discharge lamp according to claim 1, characterised in that

an outlet aperture (TA) for the gas is fitted in the area of the non-conductive body (AH), which carries the anode (A), near the specimen (PR) sealing the gas chamber (GR) as a cathode in such a way that

compression of the atomised specimen material occurs in a plane parallel to the surface of the specimen (PR) sealing the gas chamber (GR).

3. Glow discharge lamp according to claim 2, characterised in that

the plane of the outlet aperture (TA) lies at a distance of from 0.5 mm to 20 mm from the specimen (PR).

4. Glow discharge lamp according to claim 3 or claim 2, characterised in that

the inner gas chamber (GR) and the anode (A) are rotationally suymmetrical and the outlet aperture (TA) is constructed as a gap (SP) in a gap portion (SPT) extending circularly over the inner wall.

5. Glow discharge lamp according to claim 3 or claim 2, characterised in that

the inner gas chamber (GR) and the anode (A) are rotationally symmetrical and the outlet aperture (TA) is formed by pores of a porous non-conductive material of a gap portion (SPT).

6. Gas discharge lamp according to claim 4 or claim 5 having a rotationally symetrically constructed gas chamber, characterised in that

the inner diameter of the non-conductive body (AH) is reduced from the region of the anode (A) up to the region of the outlet aperture (TA) so that there is an inner chamber in the shape of a truncated cone, and in that

the anode is of annular construction.

7. Gas discharge lamp according to one of the preceding claims, characterised in that

the non-conductive body (AH) is made of ceramics material which can be processed by machining or otherwise, and which cannot be influenced by temperatures in the range up to 300°C.

8. Gas discharge lamp according to one of the preceding claims, characterised in that

the distance between the anode and the specimen acting as the cathode is 1 to 5 cm.